Europäisches Patentamt

European Patent Office

Office européen des brevets

(19)

(11) **EP 1 273 229 A1**

## (12) EUROPEAN PATENT APPLICATION
published in accordance with Art. 158(3) EPC

(43) Date of publication:
**08.01.2003 Bulletin 2003/02**

(21) Application number: **01969025.4**

(22) Date of filing: **30.01.2001**

(51) Int Cl.⁷: **A01N 25/18**, A01N 53/00,
A01N 61/00

(86) International application number:
**PCT/JP01/00611**

(87) International publication number:
**WO 01/078508 (25.10.2001 Gazette 2001/43)**

(84) Designated Contracting States:
**AT BE CH CY DE DK ES FI FR GB GR IE IT LI LU
MC NL PT SE TR**

(30) Priority: **13.04.2000 JP 2000111596**

(71) Applicant: **Fumakilla Limited
Tokyo 101-8606 (JP)**

(72) Inventors:
• **NISHINO, Shingi
Higashi-ku, Hiroshima-shi, Hiroshima 732 (JP)**

• **YAMASAKI, Satoshi
Hatsukaichi-shi, Hiroshima 738-0038 (JP)**
• **SUGIURA, Masaaki
Ohnocho, Saeki-gun, Hiroshima 739-0455 (JP)**
• **HATTORI, Atsuhiko
Ohnocho, Saeki-gun, Hiroshima 739-0442 (JP)**

(74) Representative: **Grünecker, Kinkeldey,
Stockmair & Schwanhäusser Anwaltssozietät
Maximilianstrasse 58
80538 München (DE)**

(54) **METHOD FOR CONTROLLING INSECT PESTS BY VAPORIZATION OF PESTICIDES**

(57)     A debugging method is disclosed using a preparation containing a chemical which is non-organophosphorus chemical and which is higher in vapor pressure than d, d - T80 - pralluthrin and higher in debugging potency than transfluthrin.

**EP 1 273 229 A1**

**Description**

Technical Field

The present invention relates to a debugging method of excluding or expelling a harmful or noxious insect by chemical volatilization that is high in repellent potency, allows the potency to last for a long time and is capable of evaporating or volatilizing the chemical at a room temperature and yet at a reduced amount of energy.

Background Art

There has also been known an electric mosquito-repellent utensil as a means to expel noxious or harmful insects such as mosquitoes. This apparatus has a mat or core impregnated with a chemical and is operated with a power supply available in a house and converted into thermal energy to heat the mat or core, thereby thermally volatilizing the chemical. This means, however, has the inconvenience that it cannot be used where the power supply is unavailable.

In order to resolve this problem, a study is en route to develop a portable mosquito-repellent apparatus powered with a battery to obtain heat energy sufficient to thermally volatilize a chemical. A battery used by such an apparatus consumes up quickly and it is now the situation that it is hard to make the apparatus practically usable.

Debugging methods proposed in an attempt to resolve this problem includes, for example, a method in which a porous carrier such as of a resin is impregnated with dichlorvos which is an organophosphorus chemical and hung in the air, and a method in which such a carrier is accommodated in a receptacle to allow the chemical under the fan's wind force to volatilize and diffuse. However, the use of an organophosphorus chemical to expel harmful or unhygienic insects has met with consumers' resistance from rise in safety awareness these days, and neither of these methods has been found satisfactory.

Accordingly, on paying an attention to transfluthrin, a pyrethroid chemical, which is volatile at a room temperature and less harmful to men and beasts, a debugging apparatus is being developed in which a porous carrier impregnated with this chemical is ventilated with an air flow from a fan to volatilize and diffuse the active ingredient. The apparatus has been found effective to certain harmful or noxious insects such as mosquitoes, but its expelling efficacy so far not very sufficient as yet. In order to make up for the insufficiency in expelling efficacy, there is no choice but to make larger in size the carrier to make it impregnable with a larger amount of the chemical.

It should also be mentioned that a debugging apparatus or utensil capable of volatilization at a room temperature and thus finding frequent opportunities of being used outdoors or in a field is more portable or handy as the apparatus or utensil is smaller in size. However, with the chemical described above, the problem with the size of the apparatus or utensil are left unresolved.

Accordingly, it is an object of the present invention to provide a method of debugging by chemical volatilization that makes a debugging apparatus advantageously smaller in size, that allows an active ingredient to thermally volatilize not only by electric heating but at a lower temperature using a warmer packed with chemical material, and further that permits an active ingredient to volatilize spontaneously.

Disclosure of the Invention

The present invention provides in a form of implementation thereof a debugging method of excluding or expelling a harmful or noxious insect by chemical volatilization, characterized by using a preparation containing a chemical which is non-organophosphorus chemical and which is higher in vapor pressure than d, d - T80 - prallethrin and higher in debugging potency than transfluthrin.

According to the present invention, using a chemical preparation which is higher in vapor pressure than d, d - T80 - prallethrin allows an active ingredient to thermally volatilize not only by electric heating but at a lower temperature using a warmer packed with chemical material. Also, a battery may be used to rotate a fan and to allow an active ingredient to volatilize with a wind created by the fan. Further, an active ingredient can be volatilized spontaneously and thereby a debugging can be carried out where a power supply is unavailable.

Further, high debugging potency of a chemical for use in the present invention permits using the chemical effectively in a reduced amount, enables its carrier or carriers to be reduced in volume, and makes a debugging apparatus advantageously smaller in size, compact and portable or handy.

These and other features, objects and advantages of the present invention will become more readily apparent to those of ordinary skill in the art from the following detailed description of the preferred forms of embodiment thereof as illustrated in the various drawing Figures.

Brief Description of Drawings

In the accompanying drawings:

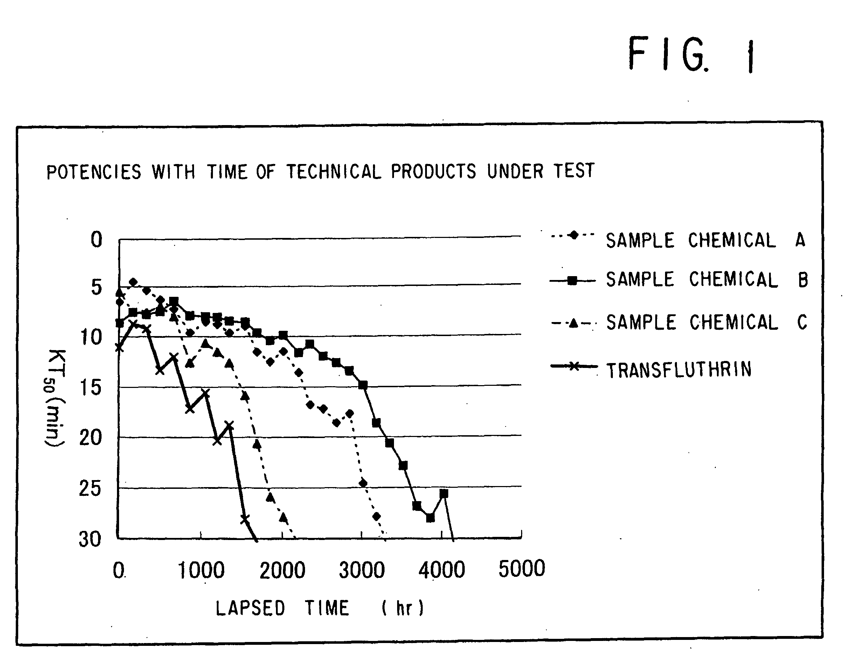

Fig. 1 is a graph that depicts potencies with time of various technical products under test in an embodiment of the present invention.

Best Modes for Carrying Out the Invention

An explanation is given in respect of an embodiment of the present invention.

In order to provide a satisfactory method of debugging noxious or harmful insects by volatilization of a chemical which resolves problems in the prior art as discussed hereinbefore, the investigations of the present inventor indicate that lines, vapor pressures and debugging potency or efficacy of chemicals must primarily be taken into account. In order for such a method to be practical, it has also been made clear to be essential for the same to satisfy the requirements stated below.

(1) Lines of Chemicals

Such chemicals as diazinon and dichlorvos have for long been well known as organophosphorus insecticides. These chemicals have been processed into a powder material or an oil solution or emulsion as an epidemic prevention or agricultural chemicals. Among organophosphorus chemicals, dichlorvos which is volatile at a room temperature has also been made available in the market in the form in which it as a volatile chemical is impregnated in a resin for release into the atmosphere. While product chemicals using organophosphorus chemicals have been manufactured and sold on official approvals or permissions, there is an unfillable gap in opinion between makers and consumer groups and in fact a movement has been brought about by some consumer groups to oppose the use of any organophosphorus chemical. Under the circumstances, the practice of a debugging method by a volatile chemical according to the invention permits refraining from using an organophosphorus chemical.

(2) Vapor pressure

A chemical for use in this aspect of the present invention should have a vapor pressure more than that of d, d - T - 80 prallethrin.

This requirement not only enables a chemical if heated to volatilize at a lower temperature but also enables a chemical to spontaneously volatilize or to be volatilized by the force of a wind created by a fan. Thus, the requirement permits a chemical to volatilize with a minimum amount of energy.

(3) Potency to exterminate noxious or harmful insects

A chemical for use in this aspect of the present invention should have a potency to debug that is higher than that of transfluthrin. This requirement enables a chemical to be minimized in volume.

At this point it should be noted that the terms "debug" and "exterminate" are used herein not only to mean "kill" in the narrow sense but to mean "knock down", and "expel" or "drive out" from a space in which human being is existent. If the insect is a mosquito, they are also used to mean stop it from bloodsucking. Thus, the term "potency" or "efficacy" "to debug harmful or noxious insects" is intended to mean a power to keep the environment in which human being is unharmed or uninjured by the insects. It should also be noted that the term "harmful or noxious insects" are used herein not only to mean hygiene bags such as flies and mosquitoes but also to mean discomfort bugs such as chironomid which give discomfort to human being.

In order to confirm the correctness of the foregoing points of view according to the present invention and to affirm the presence of a chemical (technical product), three types of experimentation stated below have been conducted.

- ■ Narrowing down chemicals (technical products) by preliminary tests (screening tests);
- ■ Survey on vapor pressures of chemicals (technical products) by vapor pressure comparative tests; and
- ■ Checking potency (efficacy) by chemical efficaciousness tests

1. Preliminary tests (screening tests)

In order to understand if pyrethroid technical products A, B, C, D, E, F, G and H whose structural formulae have not yet been elucidated are usable chemicals for a chemical volatilizing debugging method according to the present invention, they were subjected, together with existing pyrethroid chemicals, to comparative debugging efficaciousness tests and comparative vapor pressure tests.

First, debugging efficaciousness tests were performed. For the criterion of judgment to compare degrees of efficaciousness, the effect of blood sucking by mosquitoes of rats was adopted. On this, the following efficaciousness tests were carried out.

Comparative debugging efficaciousness tests

Sample chemicals used were: d, d - T80 - prallethrin, transfluthrin, d1, d - T80 - allethrin, d-T80 - furamethrin, terallethrin and empenthrin; and pyrethroid technical products A, B, C, D, E, F, G and H.

Sample insects used were female adult stegomyia mosquitoes (Aedes albopictus) of Fumakilla (spelled phonetically) series 6th to 9th after emergence.

Sample chemical volatilizing form: Using a liquid type electric mosquito repellent utensil, a liquid agent (referred to below as "sample liquid") obtained by diluting each of the sample chemical with a solvent in a varying concentration was allowed to volatilize.

Method used for tests: A test was conducted in two 8 straw mat (13.2 m$^2$) rooms, one as a treatment zone and the other as a non-treatment zone, both in a no-wind state and at a constant room temperature of 32 °C.

In the treatment zone, three cages each with a rat confined therein were placed equidistantly spaced apart (about 20 cm) in the center of the test room. The mosquito repellent utensil placed on the floor surface of the center of the test room was preliminarily electrically energized to operate, and to thermally volatilize each of the sample liquids and fumigate the room therewith for a period of 30 minutes, and then about 100 (one hundred) of sample mosquitoes were released into the test room. After 2 hours following the release of the mosquitoes, all these sample mosquitoes were knocked down by using a mosquito repellent mat, and the number of the mosquitoes which had blood sucking was counted to find the proportion of bloodsucking.

In the non-treatment zone, too, after the 2 hours of bloodsucking, the proportion of bloodsucking was found.

A rate of bloodsucking prevention was derived from the proportions of blood sucking in the treatment and non-treatment rooms as expressed as the following equation:

$$\text{Rate of bloodsucking prevention} = (\text{Total bloodsucking proportion in the non-treatment zone} - \text{Total bloodsucking proportion in the treatment zone}) \div \text{Total bloodsucking proportion in the non-treatment zone} \times 100$$

Also, on the basis of these amounts of volatilization and rates of bloodsucking prevention, an amount of volatilization at a 50 % rate of bloodsucking prevention (IC$_{50}$ value) and an amount of volatilization at a 90 % rate of bloodsucking prevention (IC$_{90}$ value) are found and shown in Table 1 below.

Table 1

| Bloodsucking Preventive Amounts of Volatilization and Potency Ratios of Chemicals (including technical products) | | | | |
|---|---|---|---|---|
| Chemical (primary body) | IC$_{50}$ Value (mg/hr) | Potency Ratio (Etoc 100) | IC$_{90}$ Value (mg/hr) | Potency Ratio (Etoc 100) |
| d,d-T80 - prallethrin (Etoc) | 0.0081 | 100.0 | 0.039 | 100.0 |
| Transfluthrin | 0.0430 | 19.0 | 0.134 | 29.2 |
| d1,d-T80 - allethrin | 0.0630 | 12.9 | 0.412 | 9.5 |
| d-T80 - furamethrin | 0.1170 | 6.9 | 0.270 | 14.4 |
| Terallethrin | 0.3650 | 2.2 | 1.028 | 3.8 |
| Empenthrin | 1.1390 | 0.7 | 3.354 | 1.2 |
| A | 0.0041 | 197.1 | 0.0079 | 496.8 |

Table 1   (continued)

| Bloodsucking Preventive Amounts of Volatilization and Potency Ratios of Chemicals (including technical products) | | | | |
|---|---|---|---|---|
| Chemical (primary body) | IC $_{50}$ Value (mg/hr) | Potency Ratio (Etoc 100) | IC $_{90}$ Value (mg/hr) | Potency Ratio (Etoc 100) |
| B | 0.0047 | 172.3 | 0.0083 | 469.9 |
| C | 0.0062 | 130.6 | 0.0112 | 348.2 |
| D | 0.0460 | 17.5 | 0.1830 | 21.3 |
| E | 0.0590 | 13.7 | 0.1740 | 22.4 |
| F | 0.1230 | 6.6 | 0.7240 | 5.4 |
| G | 0.2890 | 2.8 | 0.8970 | 4.3 |
| H | 0.4020 | 2.0 | 1.2780 | 3.1 |

While in Table 1 relative potency ratios with the potency of d, d - T80 -prallethrin (Etoc) assumed to be 100 are shown, noting that chemicals which are more efficacious than transfluthrin are A, B and C and d, d - T80 - prallethrin (Etoc) and the latter must be excluded from the standpoint of vapor pressure, it proves that chemicals (technical products) A, B and C are usable for a debugging method according to the present invention.

2. Comparative vapor pressure tests

Next, by using gas chromatography, the various chemicals including chemicals A, B and C screened out by the foregoing comparative debugging efficaciousness tests were compared with d, d - T80 - prallethrin (Etoc) as regards their vapor pressures.

The gas chromatography test as its temperature conditions had an initial temperature of 60 °C, and a temperature rise of 5 °C per minute up to a maximum temperature of 250 °C which was held for a period of 5 minutes whereupon the process ended.

The filler used was made up of methyl silicon polymer which is non-polar.

It should also be noted that as an internal standard substance use was made of sebacic acid - n - butyl and added to confirm that there was no deviation in retention time from one test to another.

Retention times for the various chemicals are listed in Table 2 in the order of shorter to longer.

Table 2

| Chemical | Retention Time (min) |
|---|---|
| diethyl toluamide | 16.5 |
| Empenthrin | 20.1 |
| Terallethrin | 23.3 |
| transfluthrin | 23.6 |
| C | 24.5 |
| A | 25.1 |
| B | 26.4 |
| d1,d-T80-allethrin | 26.6 |
| d,d-T80-prallethrin (Etoc) | 27.1 |
| Phenothorin | 33.7 |
| Note that diethyl toluamide, not insect killer technical product, was used to take data for reference. | |

From the test results shown in Table 2, it is seen that chemicals A, B and C in vapor pressure are lower than transfluthrin but higher than d, d - T80 - prallethrin, and are thus chemicals which are suitable for use in the debugging method according to the present invention.

3. Comparative debugging efficaciousness tests

Using chemicals A, B and C screened out by the preliminary tests, a test in which they were volatilized spontaneously (Example 1) and a test in which they were volatilized as subjected to a fan wind power (Example 2) were carried out.

Example 1 (qualification as spontaneous volatilization chemicals)

Using chemicals A, B and C screened out by the preliminary tests, efficaciousness of each of them when allowed to volatilize spontaneously was compared with that of transfluthrin when allowed to volatilize spontaneously.

Sample preparations (chemicals and their carriers according to the present invention):

A non-woven polypropylene fabric (made by Idemitsu Petroleum Chemicals Co., Ltd., product name RW2100, density 100 grams/m$^2$) of 50 cm $\times$ 40 cm was coated with a hexane solution of 100 milliliter containing 1 % (W/V) of chemical A, B, C and left to dry for 24 hours (effective amount of chemical: 1000 milligrams).

Comparative preparation (chemical and its carrier):

A non-woven polypropylene fabric (made by Idemitsu Petroleum Chemicals Co., Ltd., product name RW2100, density 100 grams/m$^2$) of 50 cm $\times$ 40 cm was coated with a hexane solution of 100 milliliter containing 1 % (W/V) of transfluthrin and left to dry for 24 hours (effective amount of chemical: 1000 milligrams).

Testing method: efficaciousness tests in a 8 straw mat room with a volume of 33 m$^3$

In the center of the test room with the volume of 33 m$^3$ (3.65 m $\times$ 3.65 m $\times$ 2.5 m high), each chemical carrier as prepared as above was placed as hung on a hook suspended in the center of the room to let the corresponding chemical volatilize spontaneously for a period of 3 hours. Thereafter, a triangular net casing (20 cm $\times$ 20 cm $\times$ 16.4 cm high) of 16 mesh nylon net containing 10 (ten) female adult common house mosquitoes (Culex pipiens pallens) was placed as hung in an area at each of the four corners (spaced from the wall surfaces at a distance of 90 cm) at a height of 150 cm from the room floor and was exposed to the chemical atmosphere. The number of knock-downs with elapse of time from the exposure was observed in the room to calculate a $KT_{50}$ value according to the Bliss' probit method.

A test was also conducted likewise for the comparative chemical and its carrier.

After the tests ended, the samples chemicals were let volatilize spontaneous in the room of a constant temperature of 30 °C. The same test was repeated at given intervals and efficaciousness was then examined each time.

Results of the tests are shown in Tables 3 and 4 below and also in Fig. 1.

Table 3

| Relation between Elapsed Time and Potency in case of Spontaneous Volatilization | | | | | | | | | | | | | |
|---|---|---|---|---|---|---|---|---|---|---|---|---|---|
| | KT $_{50}$ (min) changing with elapsed time (hr) | | | | | | | | | | | | |
| | 0 | 168 | 336 | 504 | 672 | 864 | 1056 | 1200 | 1344 | 1536 | 1680 | 1848 | 2016 |
| Sample chemical A | 6.53 | 4.52 | 5.38 | 6.28 | 7.25 | 9.60 | 8.50 | 8.80 | 9.70 | 8.97 | 11.60 | 12.50 | 11.50 |
| Sample chemical B | 8.64 | 7.53 | 7.77 | 7.48 | 6.45 | 7.90 | 8.00 | 8.00 | 8.40 | 8.60 | 9.60 | 10.40 | 9.87 |
| Sample chemical C | 5.53 | 7.53 | 7.55 | 6.95 | 7.98 | 12.60 | 10.70 | 11.50 | 12.60 | 15.90 | 20.70 | 25.90 | 27.80 |
| Transfluthrin | 11.10 | 8.73 | 9.17 | 13.40 | 12.10 | 17.20 | 15.60 | 20.40 | 18.80 | 28.10 | 30.40 | - | - |

Table 4

| | | | | | | | | | | | | | |
|---|---|---|---|---|---|---|---|---|---|---|---|---|---|
| Relation between Elapsed Time and Potency in case of Spontaneous Volatilization | | | | | | | | | | | | | |
| | KT$_{50}$ (min) changing with elapsed time (hr) | | | | | | | | | | | | |
| | 2208 | 2352 | 2520 | 2688 | 2856 | 3024 | 3192 | 3360 | 3528 | 3696 | 3864 | 4032 | 4200 |
| Sample chemical A | 13.60 | 16.80 | 17.20 | 18.60 | 17.70 | 24.60 | 27.80 | 31.60 | - | - | - | - | - |
| Sample chemical B | 11.70 | 10.80 | 12.00 | 12.70 | 13.50 | 14.90 | 18.60 | 20.70 | 22.90 | 26.80 | 28.00 | 25.60 | 32.70 |
| Sample chemical C | 30.60 | - | - | - | - | - | - | - | - | - | - | - | - |
| Transfluthrin | - | - | - | - | - | - | - | - | - | - | | | |

EP 1 273 229 A1

From the results of Example 1, it is seen that chemicals A, B and C as used to volatilize spontaneously are each higher in potency and also longer in retention time than transfluthrin.

Example 2 (qualification as fan wind power volatilization chemicals)

Using chemicals A, B and C screened out by the preliminary tests, efficaciousness of each of them when caused to volatilize by a fan wind force was compared with that of transfluthrin when caused to volatilize by the wind force.

Comparative preparation (chemical and its carrier):

A piece of paper was prepared impregnated with a solution of transfluthrin of 300 milligrams and was ventilated with a wind from a fan rotated by a motor at 1700 rpm to allow the active ingredient to volatilize and diffuse into the environment.

Sample preparation 1: A chemical A solution of 300 milligrams was used in place of the transfluthrin solution in the comparative preparation.

Sample preparation 2: A chemical B solution of 300 milligrams was used in place of the transfluthrin solution in the comparative preparation.

Sample preparation 3: A chemical C solution of 300 milligrams was used in place of the transfluthrin solution in the comparative preparation.

Living tests were conducted in a 8 (eight) straw mat (13.2 $m^2$)room in which each of the preparations above was made active for 12 hours a day. It has been found that the comparative preparation was effective (no mosquito bite) for about 40 days and Sample preparations 1, 2 and 3 in contrast were effective for about 90, 120 and 70 days, respectively.

As the test results of Example 2 show, the preparations made of chemicals A, B and C retain their efficacy significantly longer than the existing type of preparations. It is thus seen that for example to retain their efficacy for a same period, Sample preparations 1, 2 and 3 may have the contents of their respective chemicals A, B and C or active ingredients significantly less, and may also make them smaller in size, than the comparative preparation.

It should be noted that a chemical preparation for use in the present invention may contain a repellent such as diethyl toluamide, an anti-oxidizing agent such as BHT, an insect growth control agent such as hydroprene, a synergist such as piperonyl butoxide, and/or any other insecticide, mite killer or microbicide not mentioned earlier (but excluding organophosphorus chemicals).

Among others, a method according to the present invention provides advantages as stated below.

Using a chemical preparation which is higher in vapor pressure than d, d - T80 - prallethrin allows an active ingredient to thermally volatilize not only by electric heating but at a lower temperature using a warmer packed with chemical material. Also, a battery may be used to rotate a fan and to allow an active ingredient to volatilize with a wind created. by the fan. Further, an active ingredient can be volatilized spontaneously and thereby a debugging can be carried out where a power supply is unavailable.

High debugging potency of a chemical for use in the present invention permits using the chemical effectively in a reduced amount, enables its carrier or carriers to be reduced in volume, and makes a debugging apparatus advantageously smaller in size, compact and portable or handy.

Although the present invention has been described hereinbefore in terms of the presently preferred forms of embodiments with respect to or embodied in a method of volatilizing a chemical, it is to be understood that such disclosure is purely illustrative and is not to be interpreted as limiting. Consequently, without departing from the spirit and scope of the invention, various alterations, modifications, and/or alternative applications of the invention will, no doubt, be suggested to those skilled in the art after having read the preceding disclosure. Accordingly, it is intended that the following claims be interpreted as compassing all alterations, modifications, or alternative applications as fall within the true spirit and scope of the invention.

**Claims**

1. A debugging method of expelling a harmful or noxious insect by chemical volatilization, **characterized by** using a preparation containing a chemical which is non-organophosphorus chemical and which is higher in vapor pressure than d, d - T80 - prallethrin and higher in debugging potency than transfluthrin.

FIG. 1

POTENCIES WITH TIME OF TECHNICAL PRODUCTS UNDER TEST

····◆··· SAMPLE CHEMICAL A

──■── SAMPLE CHEMICAL B

──▲── SAMPLE CHEMICAL C

──✕── TRANSFLUTHRIN

**INTERNATIONAL SEARCH REPORT**

| International application No. |
| --- |
| PCT/JP01/00611 |

A. CLASSIFICATION OF SUBJECT MATTER
    Int.Cl⁷ A01N25/18, A01N53/00, A01N61/00

According to International Patent Classification (IPC) or to both national classification and IPC

B. FIELDS SEARCHED

Minimum documentation searched (classification system followed by classification symbols)
    Int.Cl⁷ A01N25/18, A01N53/00, A01N61/00

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP, 10-182305, A (Sumitomo Chemical Company, Limited), 07 July, 1998 (07.07.98), Column 1, line 1 to Column 2, line 9 (Family: none) | 1 |
| X | JP, 10-203904, A (Dainippon Jochugiku Co., Ltd.), 04 August, 1998 (04.08.98), Column 1, line 1 to Column 3, line 16; page 6, table 1 (Family: none) | 1 |
| X | JP, 10-194904, A (Dainippon Jochugiku Co., Ltd.), 28 July, 1998 (28.07.98), Column 1, line 1 to Column 3, line 16; page 5, table 1 & JP, 11-127755, A & KR, 98042337, A & US, 6074656, A | 1 |
| X | JP, 11-255604, A (Sumitomo Chemical Company, Limited), 21 September, 1999 (21.09.99), Column 1, line 1 to Column 2, line 33 & FR, 2767028, A1 & BR, 9802848, A & US, 6169081, A & ES, 2152839, A1 | 1 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 April, 2001 (12.04.01) | 24 April, 2001 (24.04.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

11

### INTERNATIONAL SEARCH REPORT

| | International application No. |
|---|---|
| | PCT/JP01/00611 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP, 10-182304, A (Fumakilla Ltd.),<br>07 July, 1998 (07.07.98),<br>Column 1, line 1 to Column 4, line 25   (Family: none) | 1 |
| X | JP, 9-12405, A (Fumakilla Ltd.),<br>14 January, 1997 (14.01.97),<br>Column 1, line 1 to Column 3, line 41   (Family: none) | 1 |
| X | US, 5644866, A (Yoshio Katsuda),<br>08 July, 1997 (08.07.97),<br>Column 3, line 22 to Column 8, line 25<br>& DE, 19525782, A1   & FR, 2722368, A1<br>& BR, 9503318, A     & JP, 8-23851, A<br>& ES, 2121521, A1   & CN, 1133119, A<br>& AU, 687200, B     & IT, 1278145, B<br>& CA, 2153821, C     & KR, 137490, B1 | 1 |
| X | JP, 2-202802, A (EARTH CHEMICAL CO., LTD.),<br>10 August, 1990 (10.08.90),<br>page 1, left column, line 1 to page 2, upper right column,<br>line 13   (Family: none) | 1 |
| X | JP, 56-90004, A (EARTH CHEMICAL CO., LTD.),<br>21 July, 1981 (21.07.81),<br>page 1, left column, line 1 to page 3, upper right column,<br>line 2   (Family: none) | 1 |
| X | GB, 1424170, A (SUMITOMO CHEMICAL COMPANY LIMITED),<br>18 April, 1974 (18.04.74),<br>pages 1 to 53, 59 to 73<br>& DE, 2418950, A1   & FR, 2226383, A1<br>& NL, 7405313, A     & US, 4003945, A<br>& US, 4118505, A     & US, 4263463, A<br>& JP, 49-132230, A   & HU, 13401, T<br>& IL, 44667, A       & CH, 611129, A3<br>& IT, 1049276, B     & CA, 1061351, A1<br>& SU, 1255048, A1 | 1 |
| X | JP, 2000-23612, A (Dainippon Jochugiku Co., Ltd.),<br>25 January, 2000 (25.01.00),<br>Column 1, line 1 to Column 2, line 32; page 5,   table 1<br>(Family: none) | 1 |
| X | JP, 8-310907, A (Dainippon Jochugiku Co., Ltd.),<br>26 November, 1996 (26.11.96),<br>Column 1, line 1 to Column 3, line 37; pages 7 to 8,<br>table 1 (Family: none) | 1 |
| X | JP, 3-151305, A (EARTH CHEMICAL CO., LTD.),<br>27 June, 1991 (27.06.91),<br>page 1, left column, line 1  to page 2, lower right column<br>line 14   (Family: none) | 1 |
| PX | JP, 2000-198702, A (Fumakilla Ltd.),<br>18 July, 2000 (18.07.00),<br>Column 1, line 1 to Column 3, line 46   (Family: none) | 1 |
| PX | JP, 2000-189032, A (Fumakilla Ltd.),<br>11 July, 2000 (11.07.00),<br>Column 1, line 1 to Column 6, line 49   (Family: none) | 1 |

Form PCT/ISA/210 (continuation of second sheet) (July 1992)

## INTERNATIONAL SEARCH REPORT

| International application No. |
| --- |
| PCT/JP01/00611 |

C (Continuation). DOCUMENTS CONSIDERED TO BE RELEVANT

| Category* | Citation of document, with indication, where appropriate, of the relevant passages | Relevant to claim No. |
| --- | --- | --- |
| PX | JP, 2000-139319, A (Fumakilla Ltd.), 23 May, 2000 (23.05.00), Column 1, line 1 to Column 9, line 1 (Family: none) | 1 |

Form PCT/ISA/210 (continuation of second sheet) (July 1992)

**INTERNATIONAL SEARCH REPORT**

International application No.

PCT/JP01/00611

**Box I   Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: a portion of Claim 1
   because they relate to parts of the international application that do not comply with the prescribed requirements to such an extent that no meaningful international search can be carried out, specifically:

    See extra sheet

3. ☐ Claims Nos.:
   because they are dependent claims and are not drafted in accordance with the second and third sentences of Rule 6.4(a).

**Box II   Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.
                         ☐   No protest accompanied the payment of additional search fees.

Form PCT/ISA/210 (continuation of first sheet (1)) (July 1992)

14

## INTERNATIONAL SEARCH REPORT

International application No.

PCT/JP01/00611

Continuation of Box No.I of continuation of first sheet (1)

In the invention of claim 1, the pesticide to be used is not specifically prescribed, though it is limited to a non-organophosphorus pesticide whose vapor pressure and control efficiency are respectively higher than those of specific pesticides. Additionally, methods for controlling insect pests by vaporization of pyrethroids are generally conducted, and the control efficiency varies depending on the object of control and/or experimental conditions and thus is not defined precisely. Accordingly, the above limitation alone does not sufficiently specify the technical features of the pesticide. Therefore, it is impossible to carry out a meaningful search in respect of the wording "containing a pesticide having a control efficiency higher than that of transfluthrin".

Form PCT/ISA/210 (extra sheet) (July 1992)